Europäisches Patentamt

**European Patent Office**

Office européen des brevets

(11) Veröffentlichungsnummer: **0 220 467**
B1

(12) **EUROPÄISCHE PATENTSCHRIFT**

(45) Veröffentlichungstag der Patentschrift:
13.12.89

(51) Int. Cl.⁴: **G06K 9/48**

(21) Anmeldenummer: **86112861.9**

(22) Anmeldetag: **17.09.86**

(54) Verfahren zur einheitlichen symbolischen Beschreibung von Dokumentmustern in einem Automat.

(30) Priorität: 30.09.85 DE 3534873

(43) Veröffentlichungstag der Anmeldung:
06.05.87 Patentblatt 87/19

(45) Bekanntmachung des Hinweises auf die Patenterteilung:
13.12.89 Patentblatt 89/50

(84) Benannte Vertragsstaaten:
AT BE CH DE FR GB IT LI NL SE

(56) Entgegenhaltungen:
EP-A- 0 033 978
EP-A- 0 107 789

SIEMENS FORSCHUNGS- UND
ENTWICKLUNGSBERICHTE, Band 13, Nr. 3, 1984,
Seiten 114-117, Springer-Verlag, Würzburg, DE; L.
BERNHARDT: "Three classical character recognition
problems, three new solutions"
TRANSACTIONS OF THE I.E.C.E. OF JAPAN, Band E-64,
Nr. 10, Oktober 1981, Seiten 661-666, Tokyo, JP; T. AGUI
et al.: "Sequential computer processing of a collection
of closed curves and its application to pattern
recognition"
3IEME CONGRES RECONNAISSANCE DES FORMES ET
INTELLIGENCE ARTIFICIELLE, 16.-18. September 1981,
Nancy, Seiten 539-551; C. BOURDEAU et al.: Etude et

(73) Patentinhaber: Siemens Aktiengesellschaft,
Wittelsbacherplatz 2, D-8000 München 2(DE)

(72) Erfinder: Scherl, Wolfgang, Dipl.-Ing., Kafkastrasse 54,
D-8000 München 83(DE)

(56) Entgegenhaltungen: (Fortsetzung)

réalisation d'un extracteur rapide de contours fermés
d'une image binarisée"
PROCEEDINGS OF THE 4TH INTERNATIONAL JOINT
CONFERENCE ON PATTERN RECOGNITION, 7.-10.
November 1978, Kyoto, JP, Seiten 794-796; K.
YAMAMOTO et al.: "Recognition of handprinted
characters by outermost point method"

**Beschreibung**

Die vorliegende Erfindung betrifft ein Verfahren zur einheitlichen symbolischen Beschreibung von Dokumentmustern in Form von Datenstrukturen in einem Automaten, wobei sich die Dokumentmuster aus den Komponenten "Text", "Grafik" und/oder "Bild" zusammensetzen können, zum Zwecke der Zerlegung des Dokumentmusters in diese Komponenten und zur Weiterverarbeitung dieser Komponenten in auswertenden Moduln für spezielle Anwendungsfälle, wobei aus den digitalisierten Ausgangssignalen einer optischen Abtastvorrichtung zeilenweise Deskriptoren extrahiert werden, welche Stützstellen entlang Rändern in einem betreffenden Dokumentmuster darstellen, wobei in einem ersten Modul Deskriptoren errechnet und die Daten betreffend die Deskriptoren in einem jeweils freien Speicherplatz eines Datenspeichers abgelegt werden, woraufhin von dem Datenspeicher eine Rückmeldung mit einer Information über den benutzten Speicherplatz erfolgt, wobei ein zweiter Modul durch Übergabe der rückgesendeten Adreßinformation aktiviert wird und diese Adreßinformation zusammen mit Listenindizes aus Listen übernimmt, wobei der zweite Modul dieser Adreßinforamtion dazu benutzt wird, den in dem Datenspeicher abgelegten Deskriptor in eine bereits vorhandene Deskriptorkette mit einem Randrepräsentanten einzubauen bzw. eine neue Deskriptorkette mit Bildung eines dafür notwendigen neuen Randrepräsentanten zu beginnen, wobei es sich bei den Deskriptorketten jeweils um eine Verkettung einzelner Deskriptoren mit Hilfe von Zeigern handelt und einer neuer Deskriptor, der in einem beliebigen Speicherplatz in dem Datenspeicher abgelegt ist, durch Zeiger mit der betreffenden bereits bestehenden Kette oder bereits bestehenden Ketten verbunden wird, wobei mit Hilfe der übergebenen Listenindizes die Position des oder der zugehörigen Randrepräsentanten direkt den Listen entnommen wird, wobei bei einer Veränderung des Repräsentanten der Deskriptorkette diese Information durch den zweiten Modul wieder in Listen rückeingetragen wird, wobei dann, wenn durch eine Deskriptorkette ein vollständig geschlossener Rand gebildet worden ist, der zweite Modul einem dritten Modul den Index dieses Randes zur weiteren Verarbeitung übergibt, wobei der dritte und folgende Moduln mehrere Ränder zu hierarchisch organisierten Datenstrukturen verketten und diese als Text-, Grafik- und/oder Bildkomponenten klassifizieren, wobei durch einen Ausgabe-Modul der Index des Repräsentanten einer fertigen, derartig hierarchisch organisierten Datenstruktur, welche die gesamte in dem Datenspeicher gespeicherte Information über diesen Repräsentanten einschließlich der Information über seine ihm untergeordneten Repräsentanten enthält, einem weitergehenden, auswertenden Verfahren in auswertenden Moduln zur Verfügung gestellt wird und wobei einem der auswertenden Moduln nur der Index des übergeordneten Repräsentanten übermittelt wird und dieser Modul durch eigenenen Zugriff auf den Datenspeicher die darin unter dem Index des betreffenden Repräsentanten gespeicherte Information bearbeitet, nach Patentanmeldung EP-A 0 206 214 , sowie eine Erweiterung dieses Verfahrens und ein Verfahren zur Extraktion von Erkennungsmerkmalen aus der auf diese Weise gewonnenen Bildbeschreibung.

Die Patentanmeldung EP-A 0 206 214 (veröffentlicht am 30.12.86) offenbart ein Verfahren zur einheitlichen symbolischen Beschreibung von Dokumentmustern in Form von Datenstrukturen in einem Automaten, wobei die Muster eines Dokuments in rechnerintern gespeicherte Datenstrukturen umgewandelt werden. Als Grundbausteine dieser Datenstrukturen kommen ausgewählte Punkte der Musterränder, nämlich sog. Deskriptoren, zum Einsatz. Durch geeignete Zeiger werden diese Deskriptoren zu höheren Einheiten, wie Ränder, Objekte und Worte zusammengefaßt. Die hierzu verwendeten Zeiger geben wesentliche Beziehungen und Bedeutungen zwischen den einzelnen Dokumentmustern von Daten wieder. Der Dokumentinhalt wird somit durch Datenketten repräsentiert. Die zur Klassifikation der Text-, Grafik- und Bildanteile notwendigen Merkmale werden ohne Rückgriff auf die Bildinformation direkt aus den Datenketten errechnet. Die zur Segmentierung nötigen Ortskoordinaten sind als Attribute in die Ketten eingetragen.

Aus der EP-A 0 033 978 ist bereits ein Verfahren zur automatischen Zeichenerkennung, Objekt-Klassifizierung oder dergl. unter Verwendung eines das jeweilige Zeichen spaltenweise abtastenden optoelektrischen Wandlers, der aus einer Reihe von Fotosensoren besteht und dessen Ausgangssignale in einem nachfolgenden Bildsignalspeicher als eine dem abgetasteten Zeichen entsprechende, aus Schwarz/Weiß-Werten bestehende Bildmustermatrix abgespeichert werden, bekannt, das dadurch gekennzeichnet ist, daß die gespeicherte Bildmustermatrix analog einer Zeichenabtastung unter verschiedenen Abtastwinkeln mit je einer entsprechend diesen Abtastwinkeln verlaufenden Schnittgeradenschar ausgelesen werden, daß pro Abtastwinkel für jede Schnittgerade die jeweilige Zahl der zwischen Schnittgerade und Zeichen sich ergebenden Schnittpunkte in Form von Schwarz/Weißwert- oder Weiß/Schwarzwert-Übergängen ermittelt wird und daß die Auswertung der pro Abtastwinkel ermittelten Schnittpunkte in der Weise erfolgt, daß

a) der Abtastbereich der Schnittgeradenschar als Anzahl der das jeweilige Zeichen wenigstens schneidenden Schnittgeraden,
b) die Summe der Schnittpunkte aller Schnittgeraden,
c) der Schwerpunkt des Abtastbereichs und
d) die Streuung der Schnittpunkte innerhalb des Abtastbereichs bezogen auf dessen Schwerpunkt ermittelt und einem Klassifikator zugeführt werden.

Der vorliegenden Erfindung liegt die Aufgabe zugrunde in Weiterbildung des gemäß Patentanmeldung EP-A 0 206 214 beanspruchten Verfahrens ein erweitertes Verfahren dieser Art und ein Verfahren zur Extraktion von Erkennungsmerkmalen aus der auf diese Weise gewonnenen Bildbeschreibung zu schaffen, wobei die zu gewinnenden Erkennungsmerkmale des sog. Winkelschnittverfahrens direkt aus den Datenelementen einer Bildbeschreibung extrahiert werden. Das erfindungsgemäße Verfahren soll eine erweiterte Einsatzfähigkeit des Winkelschnittverfahrens sowie eine Vereinfachung der Merkmalsbildung ermöglichen. Aufgabengemäß soll das Verfahren auch ohne Einsatz einer Bildbeschreibung direkt auf die Bildmatrix eines Zeichens angewendet werden können. Im Gegensatz zu bisher bekannten Verfahren soll es durch das erfindungsgemäße Verfahren genügen, auch bei hohen Geschwindigkeitsanforderungen das Zeichenmuster in einer einzigen Bildmatrix abzulegen. Außerdem sollen erfindungsgemäß in einem einzigen Abtastvorgang eines Musters von oben nach unten (oder von links nach rechts). die Winkelschnittmerkmale für verschiedene Winkel gleichzeitig berechnet werden. Die Merkmale sollen sich ohne eine Zwischenspeicherung der Rand-und Schwärzungsdichteverteilungen $c(\alpha,n)$ und $t(\alpha,n)$ errechnen lassen. Eine kammartige Abtastung des Zeichenmusters unter verschiedenen Winkeln $\alpha$ soll aufgabengemäß entfallen können.

Zur Lösung dieser Aufgabe wird ein Verfahren gemäß Patentanspruch 1 vorgeschlagen.

Vorteilhafte Weiterbildungen der Erfindung sind durch die in den Unteransprüchen angegebenen Merkmale gekennzeichnet.

Im folgenden wird die vorliegende Erfindung anhand mehrerer, bevorzugte Ausführungsbeispiele für die vorliegende Erfindung betreffender Figuren im einzelnen erläutert.

Fig. 1 zeigt ein Koordinatensystem, das über eine matrixartig aufgebaute Mustervorlage gelegt ist.

Fig. 2 zeigt schematisch eine Darstellung von vier Gliedertypen G1...G4 zur Musterrandbeschreibung.

Fig. 3 zeigt ein typisches Beispiel für ein Muster, das durch das erfindungsgemäße Verfahren abzutasten ist, sowie eine schematische Kettendarstellung mit einer Verkettung der zu diesem Muster gehörenden Gliedertypen G1...G4.

Fig. 4 zeigt eine schematische Darstellung der Verknüpfung von Deskriptorketten und Feinstrukturketten für ein typisches Muster, aus dem sich diese Verknüpfungsstruktur ergibt.

Fig. 5 zeigt eine schematische Darstellung der Projektion von Randelementen auf eine Projektionsgerade von dem Mittelpunkt eines Randelements oder eines Pixels aus.

Fig. 6 zeigt schematische Darstellungen für einen Projektionsbeitrag b eines Randelements zu einer Randverteilung $c(\alpha,n)$.

Erfindungsgemäß werden der Musterdarstellung durch Randpolygone, wie aus den Druckschriften EP-A 0 106 354 bzw. EP-A 0 107 789 bekannt, Feinstrukturketten zugeordnet, die den Randverlauf eines Musters pixelgenau wiedergeben. Durch Abbildung der Randelemente bzw. der diesen zugeordneten Zeilenabschnitte auf einem c- bzw. t-Vektor werden Teilbeiträge kleiner Musterelemente zu den Häufigkeitsdiagrammen für Werte $c(\alpha,n)$ und $t(\alpha,n)$

errechnet. Diese Häufigkeitsdiagramme werden jedoch gemäß einer vorteilhaften Weiterbildung des Verfahrens nicht im Automaten gespeichert. Vielmehr werden aus diesen Diagrammen abgeleitete Zeichenmerkmale, nämlich Größe d, Fläche f, Schwerpunkt m und Streuung s direkt aus den Projektionsbeiträgen der Randelemente errechnet. Die Projektionsberechnung beschränkt sich in der praktischen Ausführung auf Speicherzugriffe und einfache Additionsvorgänge. Für die Merkmalsberechnung werden Produktglieder verwendet.

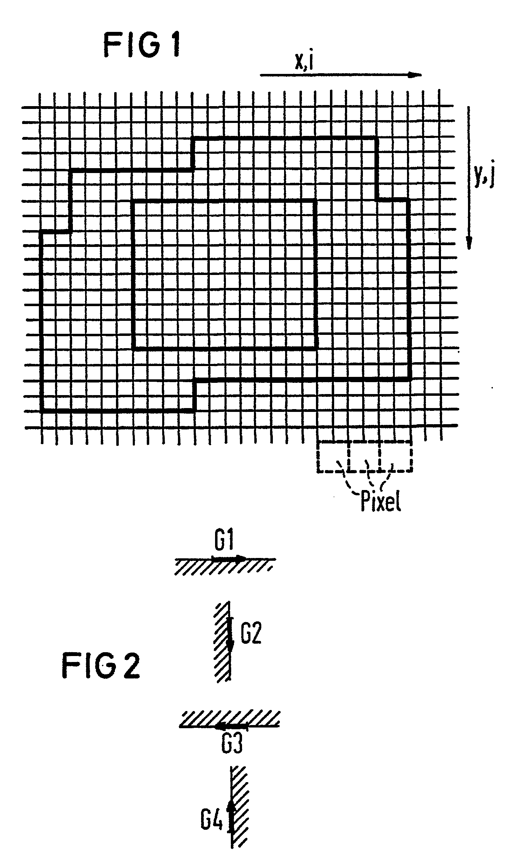

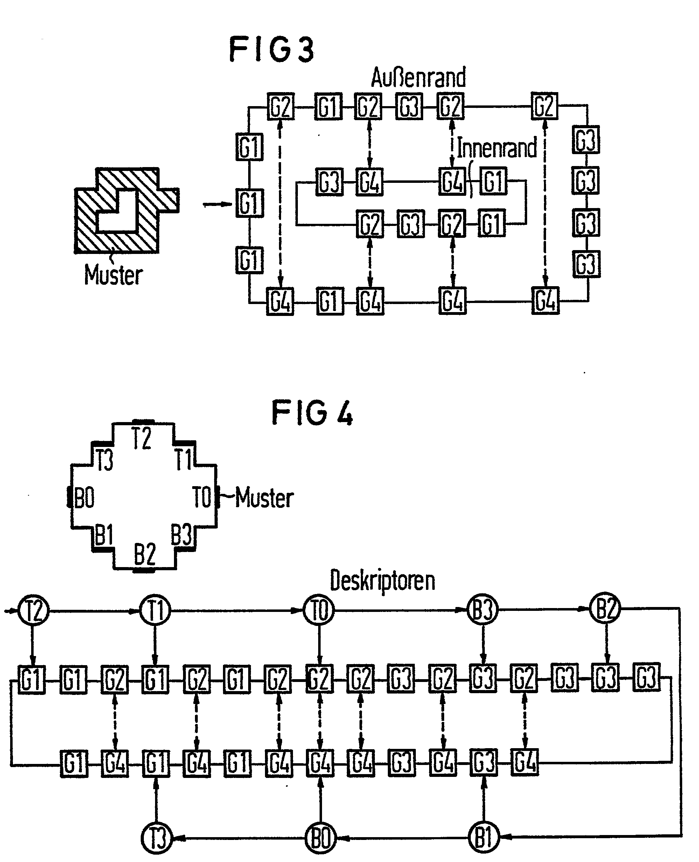

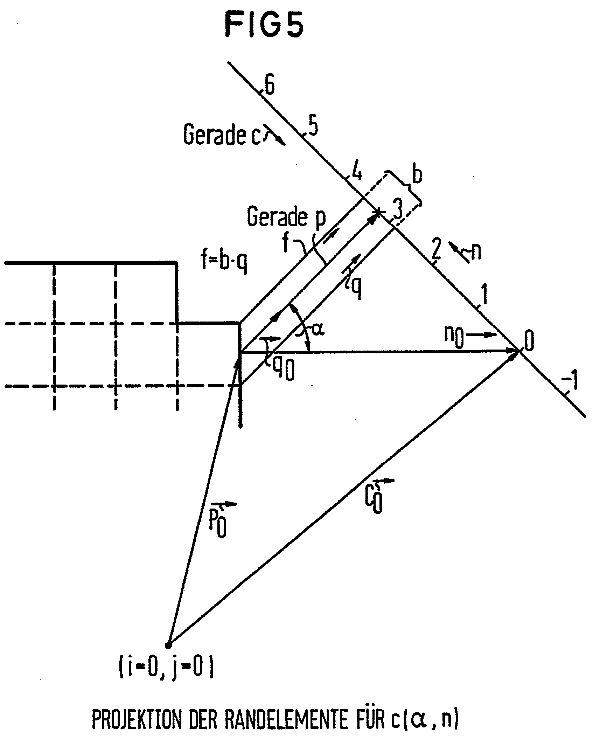

Erfindungsgemäß ist im einzelnen vorgesehen, daß in einem Feinstrukturelement-Modul Feinstrukturelemente gebildet werden und daß diese Feinstrukturelemente während der zeilenweisen Verarbeitung des Dokumentbildes zu Feinrandketten zusammengefaßt werden, welche die Randverläufe der einzelnen Muster pixelgenau wiedergeben. Die einzelnen Abschnitte dieser Feinränder werden den Deskriptoren so zugeordnet, daß sie den Randverlauf zwischen jeweils zwei Deskriptoren exakt beschreiben. Bei jeder neuen Abtastzeile werden die Daten betreffend die Feinstrukturelemente in Form von die Musterränder pixelgenau beschreibenden Feinstrukturteilketten in jeweils freien Speicherplätzen eines Datenspeichers abgelegt und untereinander gemäß dem Verlauf des Musterrandes verkettet. Eine in einer Bildzeile neu gebildete Feinstrukturteilkette wird anhand einer mitgelieferten Listeninformation mit einer bereits bestehenden, zu vervollständigenden Feinstrukturkette verkettet, und die Position desjenigen Feinstrukturelements, das das neue offene Randende der Feinstrukturkette bildet, wird in einer Rückmeldung an den Feinstrukturelement-Modul zurückgemeldet, wobei der Feinstrukturelement-Modul durch diese Rückmeldung die Position des freien Randendes in dem Datenspeicher entweder in zusätzlichen Listen zu den eingangs erwähnten Listen für die momentane Bildzeile YA und die vorhergehende Bildzeile YA-1 oder in dem der Feinrandkette übergeordneten Randrepräsentanten vermerkt, wodurch es ermöglicht wird, die in der nächsten Bildzeile als Fortsetzung des Randes entstehende Feinstrukturteilkette an den offenen Rand durch Direktzugriff anzulagern. Die Feinstrukturelemente enthalten jeweils Information über die Orientierung des betreffenden Pixels, einen Zeiger für das nächstfolgenden Feinstrukturelement und die Mittelpunktkoordinaten i, j des Elements in einem überlagerten Feinkoordinatensystem, vergl. Fig. 1. In jeder abgetasteten Bildzeile entsteht für jeden geschnittenen Musterrand eine der genannten Feinstrukturteilketten, die mit dem offenen Ende der zugehörigen Feinstrukturkette verkettet wird (Fig. 2, Fig. 3). Ein neuer Deskriptor findet bei seinem Eintrag in die Deskriptorkette im übergeordneten Randvertreter die Information über das offene Randende der zu ihm gehörenden Feinstrukturkette vor. Diese Feinstrukturkette wird bis zur Position des Deskriptors durchlaufen. In den Deskriptor wird ein auf dieses Feinstrukturelement gerichteter Zeiger eingetragen. In dem Randvertreter wird in dem Datenspeicher auf Anfang und Ende der zugehörigen Feinstrukturkette durch Zeiger verwiesen. In dem Randmodul werden beim Zusammenfließen zweier Ränder analoge Operationen zu denen für die Deskriptorketten bezüglich Erzeugen, Zusammenlegen, Erweitern und Beenden betreffend die Feinstrukturketten durchgeführt. Dem auswertenden Modul wird die hierarchisch organisierte Datenstruktur vorzugsweise für jedes zu erkennende Objekt zur Bildung von Erkennungsmerkmalen zur Verfügung gestellt. Aus den Feinstrukturelementen einer derartigen Datenstruktur werden an sich bekannte Projektionsvektoren $c(\alpha,n), t(\alpha,n)$ berechnet. Die Feinstrukturketten des zu erkennenden Objekts werden durchlaufen. Der Projektionsvektor $c(\alpha,n)$ wird dadurch berechnet, daß jedes einzelne Element aus der Feinstrukturkette auf ein Element $\underline{n}$ in dem Projektionsvektor $c(\alpha,n)$ abgebildet wird, wobei $\underline{n}$ aus den i-, j-Koordinaten eines Feinstrukturelements und dem Projektionswinkel $\alpha$ ermittelt wird und wobei der Wert "$c(\alpha,n)$" für das entsprechende Element um 1 erhöht wird. Der Projektionsvektor $t(\alpha,n)$ wird dadurch berechnet, daß die Feinstrukturketten des zu erkennenden Objekts durchlaufen werden. Dabei werden für jedes Feinstrukturelement in Abhängigkeit von den Koordinaten i, j sowie des Projektionswinkels $\alpha$ der Wert $\underline{n}$ und ein Wert $\underline{f}$ errechnet, wobei der Wert $\underline{f}$ aus einem Wert $\underline{q}$ und einem Wert $\underline{b}$ durch Multiplikation errechnet wird und wobei der Wert $\underline{q}$ dem Abstand zwischen dem Feinstrukturelement und einer Geraden $t(\alpha,n)$ entspricht (Fig. 5) wobei in die Speicherzelle $\underline{n}$ von "$t(\alpha,n)$" für jedes Feinstrukturelement der zugehörige Wert in der Weise aufaddiert wird, daß f-Werte auf der dem Muster zugewandten Seite eines Randelements einen positiven Beitrag liefern und auf der dem Muster abgewandten Seite einen negativen Beitrag liefern, wobei sich ein f-Wert als Produkt aus dem Abstand zwischen den Mittelpunktkoordinaten eines Feinstrukturelements und der Projektions geraden "$t(\alpha, n)$", nämlich dem q-Wert, und der Projektionsbreite $\underline{b}$ eines Feinstrukturelements auf der Projektionsgeraden "$t(\alpha,n)$" berechnet. Die zu extrahierenden Erkennungsmerkmale werden aus den Projektionsvektoren $c(\alpha,n), t(\alpha,n)$ in an sich bekannter Weise berechnet.

In Weiterbildung der Erfindung ist vorgesehen, daß in Abhängigkeit von der Projektionsbreite b und dem Projektionspunkt n sowohl der Beitrag eines Feinstrukturelements zu "$c(\alpha,n)$" auf benachbarte Speicherelemente von $\underline{n}$ anteilsmäßig verteilt wird als auch der Beitrag des betreffenden Feinstrukturelements zu "$t(\alpha,n)$" auf diese benachbarten Speicherelemente verteilt wird. Vorzugsweise werden die Werte $\underline{n}$, $\underline{q}$, $\underline{b}$ und $\underline{f}$ durch Tabellenzugriff in an sich bekannter Weise ermittelt. Eine andere Lösungsmöglichkeit für die vorliegende Erfindung sieht vor, daß die Werte $\underline{n}$, $\underline{q}$, $\underline{b}$ und $\underline{f}$ einerseits durch Tabellenzugriff auf Teilparameter und andererseits durch arithmetische Operationen in einem vorzusehenden Rechenwerk errechnet werden. Eine weitere Version des erfindungsgemäßen Verfahrens sieht vor, daß die Werte $\underline{n}$, $\underline{q}$, $\underline{b}$ und $\underline{f}$ ausschließlich durch Rechenoperationen ermittelt werden.

In anderer Weiterbildung der Erfindung ist vorgesehen, daß die unmittelbare Nachbarschaft zwischen Feinstrukturelementen in einer Bildzeile durch Querzeiger nach links und/oder rechts dargestellt wird.

Erfindungsgemäß ist außerdem vorgesehen, daß die Mittelpunktkoordinaten der einzelnen Feinstrukturelemente nicht in diese selbst eingetragen werden, sondern während des Durchlaufens der Feinstrukturkette mit Hilfe von Zählern ermittelt werden.

Das der Bildmatrix, nämlich der digitalisierten Grau wertinformation des Bildes, überlagerte Feinkoordinatensystem hat vorzugsweise die doppelte Auflösung der Bildmatrix und ist dieser so überlagert, daß sowohl die Mittelpunkte der Feinstrukturelemente als auch der Mittelpunkt jedes Pixels adressiert werden kann (Fig. 1).

Die Merkmalsbildung wird erfindungsmäß sowohl für einzelne Ränder als auch für hierarchisch höhere Datenstrukturen durchgeführt.

Eine andere Weiterbildung der Erfindung sieht vor, daß die Feinstrukturelemente entsprechend den Pixelkanten vorzugsweise vier unterschiedliche Ordientierungsmöglichkeiten besitzen (Fig. 2). Es ist jedoch auch vorgesehen, daß die Feinstrukturelemente zur Verbesserung der Erkennungsleistung acht Orientierungsmöglichkeiten besitzen.

Eine Anordnung zur Durchführung des erfindungsgemäßen Verfahrens ist dadurch gekennzeichnet, daß der Feinstrukturelement-Modul dem ersten Modul zur Deskriptorextraktion parallel geschaltet ist und ebenfalls Zugriff auf das bereits zuvor erwähnte aus vier Listen bestehende Listensystem für die momentane Bildzeile YA und die vorhergehende Bildzeile YA-1 hat. Eine vorteilhafte Weiterbildung der Erfindung sieht außerdem vor, daß die Funktion des Feinstrukturelements-Moduls von dem ersten Modul zur Deskriptorextraktion mit übernommen wird.

Die Anordnung zur Durchführung des erfindungsgemäßen Verfahrens ist vorteilhafterweise derart ausgebildet, daß zur Durchführung aller Abtast-, Zuordnungs-, Informationsaustausch-und Berechnungsvorgänge ein Rechner vorgesehen ist, daß der Datenspeicher ein Halbleiterspeicher ist und daß ein vorbestimmter Speicherbereich des Datenspeichers die verschiedenen Algorithmen für das Verfahren speichert.

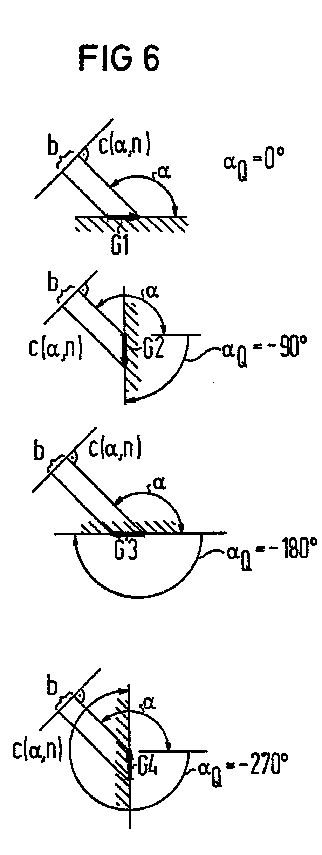

Fig. 4 zeigt, wie bereits erwähnt, schematisch das Verknüpfen von Deskriptorketten mit Deskriptoren T, B und Feinstrukturketten mit Feinstrukturelementen G. Das in Fig. 4 gezeigte Verknüpfungsmuster entspricht dem in derselben Figur dargestellten polygonen Muster. Fig. 6 zeigt, wie bereits erläutert, schematische Darstellungen zur Gewinnung des Projektionsbeitrags b eines Randelements zu der Größe $c(\alpha,n)$ bei verschiedenen Projektionswinkeln, nämlich 0°, -90°, -180°, -270°.

## Patentansprüche

1. Verfahren zur einheitlichen symbolischen Beschreibung von Dokumentmustern in Form von Datenstrukturen in einem Automaten, wobei sich die Dokumentmuster aus den Komponenten "Text", "Grafik" und/oder "Bild" zusammensetzen können, zum Zwecke der Zerlegung des Dokumentmusters in diese Komponenten und zur Weiterverarbeitung dieser Komponenten in auswertenden Moduln für spezielle Anwendungsfälle, wobei aus den digitalisierten Ausgangssignalen einer optischen Abtastvorrichtung zeilenweise Deskriptoren extrahiert werden, welche Stützstellen entlang Rändern in einem betreffenden Dokumentmuster darstellen, wobei in einem ersten Modul Deskriptoren errechnet und die Daten betreffend die Deskriptoren in einem jeweils freien Speicherplatz eines Datenspeichers abgelegt werden, woraufhin von dem Datenspeicher eine Rückmeldung mit einer Information über den benutzten Speicherplatz erfolgt, wobei ein zweiter Modul durch Übergabe der rückgesendeten Adreßinformation aktiviert wird und diese Adreßinformation zusammen mit Listenindizes aus Listen übernimmt, wobei der zweite Modul diese Adreßinformation dazu benutzt, den in dem Datenspeicher abgelegten Deskriptor in eine bereits vorhandene Deskriptorkette mit einem Randrepräsentanten einzubauen bzw. eine neue Deskriptorkette mit Bildung eines dafür notwendigen neuen Randrepräsentanten zu beginnnen, wobei es sich bei den Deskriptorketten jeweils um eine Verkettung einzelner Deskriptoren mit Hilfe von Zeigern handelt und ein neuer Deskriptor, der in einem beliebigen Speicherplatz in dem Datenspeicher abgelegt ist, durch Zeiger mit der betreffenden bereits bestehenden Kette oder bereits bestehenden Ketten verbunden wird, wobei mit Hilfe der übergebenen Listenindizes die Position des oder der zugehörigen Randrepräsentanten direkt den Listen entnommen wird, wobei bei einer Veränderung des Repräsentanten der Deskriptorkette diese Information durch den zweiten Modul wieder in die Listen rückeingetragen wird, wobei dann, wenn durch eine Deskriptorkette ein vollständig geschlossener Rand gebildet worden ist, der zweite Modul einem dritten Modul den Index dieses Randes zur weiteren Verarbeitung übergibt, wobei der dritte und folgende Moduln mehrere Ränder zu hierarchisch organisierten Datenstrukturen verketten und diese als Text-, Grafik- und/oder Bildkomponenten klassifizieren, wobei durch einen Ausgabe-Modul der Index des Repräsentanten einer fertigen, derartig hierarchisch organisierten Datenstruktur, welche die gesamte in dem Datenspeicher gespeicherte Information über diesen Repräsentanten einschließlich der Information über seine ihm untergeordneten Repräsentanten enthält, einem weitergehenden, auswertenden Verfahren in auswertenden Moduln zur Verfügung gestellt wird und wobei einem der auswertenden Moduln nur der Index des übergeordneten Repräsentanten übermittelt wird und dieser Modul durch eigenen Zugriff auf den Datenspeicher die darin unter dem Index des betreffenden Repräsentanten gespeicherte Information bearbeitet, sowie zur Extraktion von Erkennungsmerkmalen aus der auf diese Weise gewonnen Bildbeschreibung, bei dem vorgesehen ist,

- daß in einem Feinstrukturelement-Modul Feinstrukturelemente gebildet werden,
- daß diese Feinstrukturelemente während der zeilenweisen Verarbeitung des Dokumentbildes zu Feinrandketten zusammengefaßt werden, welche die Randverläufe der einzelnen Muster pixelgenau wiedergeben,
- daß die einzelnen Abschnitte dieser Feinränder den Deskriptoren so zugeordnet werden, daß sie den Randverlauf zwischen jeweils zwei Deskriptoren exakt beschreiben,
- daß bei jeder neuen Abtastzeile die Daten betreffend die Feinstrukturelemente in Form von die Musterränder pixelgenau beschreibenden Feinstrukturteilketten in jeweils freien Speicherplätzen des Datenspeichers abgelegt und untereinander gemäß dem Verlauf des Musterrandes verkettet werden,
- daß eine in einer Bildzeile neu gebildete Feinstrukturteilkette anhand einer mitgelieferten Li steninformation mit einer bereits bestehenden, zu vervollständigenden Feinstrukturkette verkettet wird und die Position desjenigen Feinstrukturelements, das das neue offene Randende der Feinstrukturkette bildet, in einer Rückmeldung an den Feinstrukturelement-Modul zurückgemeldet wird, wobei der Feinstrukturelement-Modul durch diese Rückmeldung die Position des freien Randendes in dem Datenspeicher entweder in zusätzlichen Listen zu den Listen für die momentane Bildzeile (YA) und die vorhergehende Bildzeile (YA-1) oder in dem der Feinrandkette übergeordneten Randrepräsentanten vermerkt, wodurch es ermöglicht wird, die in der nächsten Bildzeile als Fortsetzung des Randes entstehende Feinstrukturteilkette an den offenen Rand anzulagern,
- daß die Feinstrukturelemente jeweils Information über die Orientierung des betreffenden Pixels, einen Zeiger zu dem nächstfolgenden Feinstrukturelement und die Mittelpunktkoordinaten $(i, j)$ des Elements in einem überlagerten Feinkoordinatensystem enthalten (Fig. 1),
- daß in jeder abgetasteten Bildzeile für jeden geschnittenen Musterrand eine der genannten Feinstrukturteilketten entsteht, die mit dem offenen Ende der zugehörigen Feinstrukturkette verkettet wird (Fig. 2, Fig. 3),
- daß ein neuer Deskriptor bei seinem Eintrag in die Deskriptorkette im übergeordneten Randvertreter die Information über das offene Randende der zu ihm gehörenden Feinstrukturkette vorfindet,
- daß diese Feinstrukturkette bis zur Position des Deskriptors durchlaufen wird,
- daß in den Deskriptor ein auf dieses Feinstrukturele ment gerichteter Zeiger eingetragen wird,
- daß in dem Randvertreter in dem Datenspeicher auf Anfang und Ende der zugehörigen Feinstrukturkette durch Zeiger verwiesen wird,
- daß in dem Randmodul beim Zusammenfließen zweier Ränder analoge Operationen zu denen für die Deskriptorketten bezüglich Erzeugen, Zusammenlegen, Erweitern und Beenden betreffend die Feinstrukturketten durchgeführt werden,
- daß dem auswertenden Modul die hierarchisch organisierte Datenstruktur vorzugsweise für jedes zu erkennende Objekt zur Bildung von Erkennungsmerkmalen zur Verfügung gestellt wird,
- daß aus den Feinstrukturelementen einer derartigen Datenstruktur an sich bekannte Projektionsvektoren (c($\alpha$,n), t($\alpha$,n)) berechnet werden,
- daß die Feinstrukturketten des zu erkennenden Objekts durchlaufen werden,
- daß der Projektionsvektor (c($\alpha$,n)) dadurch berechnet wird, daß jedes einzelne Element aus der Feinstrukturkette auf ein Element $\underline{n}$ in dem Projektionsvektor (c($\alpha$,n)) abgebildet wird, wobei $\underline{n}$ aus den i-, j-Koordinaten eines Feinstrukturelements und dem Projektionswinkel ($\alpha$) ermittelt wird, wobei der Wert "c($\alpha$,n)" für das entsprechende Element um 1 erhöht wird,
- daß der Projektionsvektor (t($\alpha$,n)) dadurch berechnet wird, daß die Feinstrukturketten des zu erkennenden Objekts durchlaufen werden,
- daß dabei für jedes Feinstrukturelement in Abhängigkeit von den Koordinaten (i,j) sowie des Projektionswinkels ($\alpha$) der Wert $\underline{n}$ und ein Wert $\underline{f}$ errechnet werden, wobei der Wert $\underline{f}$ aus einem Wert $\underline{q}$ und einem Wert $\underline{b}$ durch Multiplikation errechnet wird und wobei der Wert $\underline{q}$ den Abstand zwischen dem Feinstrukturelement und einer Geraden (t($\alpha$,n)) entspricht (Fig. 5), wobei in die Speicherzelle $\underline{n}$ von "t($\alpha$,n)" für jedes Feinstrukturelement der zugehörige Wert in der Weise aufaddiert wird, daß f-Werte auf der dem Muster zugewandten Seite eines Randelements einen positiven Beitrag liefern und auf der dem Muster abgewandten Seite einen negativen Beitrag liefern, wobei sich ein f-Wert als Produkt aus dem Abstand zwischen den Mittelpunktkoordinaten eines Feinstrukturelements und der Projektionsgeraden "t($\alpha$,n)", nämlich dem q-Wert, und der Projektionsbreite $\underline{b}$ eines Feinstrukturelements auf der Projektionsgeraden "t($\alpha$,n)" berechnet und
- daß die zu extrahierenden Erkennungsmerkmale aus den Projektionsvektoren (c($\alpha$,n), t($\alpha$,n)) in an sich bekannter Weise berechnet werden.

2. Verfahren nach Anspruch 1, dadurch **gekennzeichnet,** daß in Abhängigkeit von der Projektionsbreite (b) und dem Projektionspunkt (n) sowohl der Beitrag eines Feinstrukturelements zu "c($\alpha$,n)" auf benachbarte Speicherelemente von $\underline{n}$ anteilsmäßig verteilt wird als auch der Beitrag des betreffenden Feinstrukturelements zu "t($\alpha$,n)" auf diese benachbarten Speicherelemente verteilt wird.

3. Verfahren nach Anspruch 1 oder 2, dadurch **gekennzeichnet,** daß die Werte $\underline{n}$, $\underline{q}$, $\underline{b}$ und $\underline{f}$ durch Tabellenzugriff ermittelt werden.

4. Verfahren nach Anspruch 1 oder 2, dadurch **gekennzeichnet,** daß die Werte $\underline{n}$, $\underline{q}$, $\underline{b}$ und $\underline{f}$ einerseits durch Tabellenzugriff auf Teilparameter und andererseits durch arithmetische Operationen in einem vorzusehenden Rechenwerk errechnet werden.

5. Verfahren nach Anspruch 1 oder 2, dadurch **gekennzeichnet,** daß die Werte $\underline{n}$, $\underline{q}$, $\underline{b}$ und $\underline{f}$ ausschließlich durch Rechenoperationen ermittelt werden.

6. Verfahren nach Anspruch 1, dadurch **gekennzeichnet,** daß die unmittelbare Nachbarschaft zwischen Feinstrukturelementen in einer Bildzeile durch Querzeiger nach links und/oder rechts dargestellt wird.

7. Verfahren nach Anspruch 1, dadurch **gekenn-**

**zeichnet,** daß die Mittelpunktkoordinaten der einzelnen Feinstrukturelemente nicht in diese selbst eingetragen werden, sondern während des Durchlaufens der Feinstrukturkette mit Hilfe von Zählern ermittelt werden.

8. Verfahren nach Anspruch 1, dadurch **gekennzeichnet,** daß das der Bildmatrix, nämlich der digitalisierten Grauwertinformation des Bildes, überlagerte Feinkoordinatensystem vorzugsweise die doppelte Auflösung der Bildmatrix hat und dieser so überlagert ist, daß sowohl die Mittelpunkte der Feinstrukturelemente als auch der Mittelpunkt jedes Pixels adressiert werden kann (Fig. 1).

9. Verfahren nach Anspruch 1, dadurch **gekennzeichnet,** daß die Merkmalsbildung sowohl für einzelne Ränder als auch für hierarchisch höhere Datenstrukturen durchgeführt wird.

10. Verfahren nach Anspruch 1, dadurch **gekennzeichnet,** daß die Feinstrukturelemente entsprechend den Pixelkanten vorzugsweise vier unterschiedliche Orientierungsmöglichkeiten besitzen (Fig. 2).

11. Verfahren nach Anspruch 1, dadurch **gekennzeichnet,** daß die Feinstrukturelemente zur Verbesserung der Erkennungsleistung vorzugsweise acht Orientierungsmöglichkeiten besitzen.

12. Anordung zur Durchführung des Verfahrens nach Anspruch 1, dadurch **gekennzeichnet,** daß der Feinstrukturelement-Modul dem ersten Modul zur Deskriptorextraktion parallelgeschaltet ist und ebenfalls Zugriff auf das Listensystem bestehend aus den Listen für die momentane Bildzeile (YA) und die vorhergehende Bildzeile (YA-1) hat.

13. Anordung zur Durchführung des Verfahrens nach Anspruch 1, dadurch **gekennzeichnet,** daß die Funktion des Feinstrukturelement-Moduls von dem ersten Modul zur Deskriptorextraktion mit übernommen wird.

14. Anordung zur Durchführung des Verfahrens nach einem der Ansprüche 1 - 11, dadurch **gekennzeichnet,** daß zur Durchführung aller Abtast-, Zuordnungs-, Informationsaustausch- und Berechnungsvorgänge ein Rechner vorgesehen ist, daß der Datenspeicher ein Halbleiterspeicher ist und daß ein vorbestimmter Speicherbereich des Datenspeichers die verschiedenen Algorithmen für das Verfahren speichert.

**Claims**

1. Method for a uniform symbolic description of document patterns in the form of data structures in an automated apparatus, it being possible for the document patterns to be composed of the components "text", "graphics" and/or "image", for the purpose of the division of the document pattern into these components and for the further processing of these components in evaluating modules for special application cases, descriptors representing interpolation nodes along edges in a respective document pattern being extracted line-by-line from the digitized output signals of an optical scanning device, descriptors being calculated in a first module and the data relating to the descriptors being stored in an in each case free storage location of a data memory, whereupon the data memory issues an acknowledgment with information about the storage location used, a second module being activated by the transfer of the returned address information and accepting this address information together with list indices from lists, the second module using this address information to incorporate the descriptor stored in the data memory into an already existing descriptor string with an edge representative or to begin a new descriptor string with the formation of a new edge representative necessary for this, the descriptor string being in each case a concatenation of individual descriptors with the aid of pointers and a new descriptor, which is stored in an arbitrary storage location in the data memory, being connected by means of pointers to the respective already existing string or already existing strings, the position of the associated edge representative(s) being taken directly from the lists with the aid of the list indices transferred, this information being entered in the lists again by the second module when there is a change of representative of the descriptor string, the second module transferring the index of this edge for further processing to a third module whenever a completely closed edge is formed by a descriptor string, the third and following modules concatenating a plurality of edges to form hierarchically organized data structures and classifying these as text components, graphics components and/or image components, an output module making available the index of the representative of a complete data structure which is hierarchically organized in this manner and which contains the entire information stored in the data memory about these representatives including the information about its subordinate representatives, to a more farreaching, evaluating process in evaluating modules, and only the index of the superordinate representative being transferred to one of the evaluating modules and this module processing the information stored therein under the index of the respective representative by its own access to the data memory, as well as for extraction of recognition characteristics from the image description obtained in this manner, in which it is provided

– that fine structure elements are formed in a fine structure element module,

– that these fine structure elements are combined during the line-by-line processing of the document image to form fine edge strings which reproduce the edge contours of the individual patterns to the pixel exactly,

– that the individual sections of these fine edges are associated with the descriptors in such a way that they describe exactly the edge contour between in each case two descriptors,

– that for each new scanning line the data relating to the fine structure elements are stored in the form of fine structure substrings describing the pattern edges exactly to the pixel in respectively free memory locations of the data memory and are concatenated with one another in accordance with the contour of the pattern edge,

– that a newly formed fine structure substring in an image line is concatenated on the basis of list information also supplied to an already existing fine structure string to be completed and the position of the fine structure element which forms the new open edge end of the fine structure string is reported back in an acknowledgement to the fine structure element module, the fine structure element module noting by means of this acknowledgement the position of the free edge end in the data memory either in additional lists to the lists for the current image line (YA) and the preceding image line (YA1) or in the edge representative superordinate to the fine edge string, as a result of which it is possible to place at the open edge the fine structure substring being produced in the next image line as a continuation of the edge,

– that the fine structure elements in each case contain information about the orientation of the respective pixel, a pointer to the next fine structure element and the mid-point coordinates (i, j) of the element in an overlaid fine coordinate system (Fig. 1),

– that there is produced in each scanned image line for each sectioned pattern edge one of said fine structure substrings which is concatenated to the open end of the associated fine structure string (Fig. 2, Fig. 3),

– that, when it is entered in the descriptor string in the superordinate edge representative, a new descriptor finds the information about the open edge end of the fine structure string associated with it,

– that this fine structure string is run through up to the position of the descriptor,

– that a pointer pointing to this fine structure element is entered in the descriptor,

– that pointers refer to the start and end of the associated fine structure string in the edge representative in the data memory,

– that, when two edges flow together, analogous operations to those for the descriptor strings with respect to creation, combination, extension and ending with regard to the fine structure strings, are carried out in the edge module,

– that the hierarchically organized data structure preferably of each object to be recognized is made available to the evaluating module for forming recognition characteristics,

– that projection vectors $(C(\alpha, n), t(\alpha, n))$ known per se are calculated from the fine structure elements of such a data structure,

– that the fine structure strings of the object to be recognized are run through,

– that the projection vector $(C(\alpha, n))$ is calculated by each individual element from the fine structure string being mapped on an element $\underline{n}$ in the projection vector $(C(\alpha, n))$, $\underline{n}$ being determined from the i and j coordinates of a fine structure element and the projection angle $(\alpha)$, the value "$c(\alpha, n)$" being incremented by 1 for the corresponding element,

– that the projection vector $(t(\alpha, n))$ is calculated by the fine structure strings of the object to be recognized being run through,

– that, in conjunction with this, the value $\underline{n}$ and a

value $f$ are calculated for each fine structure element as a function of the coordinates (i, j) as well as of the projection angle ($\alpha$), the value $f$ being calculated from a value $q$ and a value $b$ by multiplication, and the value $q$ corresponding to the distance between the fine structure element and a straight line (t($\alpha$, n)) (Fig. 5), the associated value for each fine structure element being added in the memory cell 2 of "t($\alpha$, n)" in such a manner that f-values deliver a positive amount on the side of an edge element facing the pattern and deliver a negative amount on the side facing away from the pattern, an f-value being calculated as the product from the distance between the mid-point coordinates of a fine structure element and the projection lines "t($\alpha$, n)", namely the q-value, and the projection width $b$ of a fine structure element on the projection line "t($\alpha$, n)", and
– that the recognition characteristics to be extracted are calculated in a manner know per se from the projection vectors (C($\alpha$, n), t($\alpha$, n)).

2. Method according to Claim 1, characterized in that as a function of the projection width (b) and the projection point (n) both the amount of a fine structure element for "C($\alpha$, n)" is distributed to adjacent memory elements of $n$ proportionally and the amount of the respective fine structure element for "t($\alpha$, n)" is distributed to these adjacent memory elements.

3. Method according to Claim 1 or 2, characterized in that the values $n$, $q$, $b$, and $f$ are determined by table access.

4. Method according to Claim 1 or 2, characterized in that the values $n$, $q$, $b$ and $f$ are calculated on the one hand by table access to part parameters and on the other hand by arithmetic operations in an arithmetic unit to be provided.

5. Method according to Claim 1 or 2, characterized in that the values $n$, $q$, $b$ and $f$ are exclusively determined by arithmetic operations.

6. Method according to Claim 1, characterized in that the immediate adjacency between fine structure elements in an image line is represented by cross-pointers to the left and/or right.

7. Method according to Claim 1, characterized in that the mid-point coordinates of the individual fine structure elements are not entered in these themselves, but are determined with the aid of counters while the fine structure string is run through.

8. Method according to Claim 1, characterized in that the fine coordinate system overlaid on the image matrix, namely the digitized grey scale information of the image, preferably has double the resolution of the image matrix and the latter is overlaid in such a manner that both the mid-points of the fine structure elements and the mid-point of each pixel can be addressed (Fig. 1).

9. Method according to Claim 1, characterized in that the characteristic formation is carried out both for individual edges and for hierarchically higher data structures.

10. Method according to Claim 1, characterized in that the fine structure elements have preferably four different orientation possibilities in accordance with the pixel edges (Fig. 2).

11. Method according to Claim 1, characterized in that the fine structure elements preferably have eight orientation possibilities for improving the recognition performance.

12. Arrangement for carrying out the method according to Claim 1, characterized in that the fine structure element module is connected in parallel with the first module for descriptor extraction and likewise has access to the list system consisting of the lists for the current image line (YA) and the preceding image line (YA–1).

13. Arrangement for carrying out the method according to Claim 1, characterized in that the function of the fine structure element module can also be performed by the first module for descriptor extraction.

14. Arrangement for carrying out the method according to one of Claims 1–11, characterized in that a computer is provided for carrying out all scanning, assignment, information exchange and calculation operations, in that the data memory is a semiconductor memory, and in that a predetermined memory area of the data memory stores the various algorithms for the process.

**Revendications**

1. Procédé pour décrire d'une manière symbolique et uniforme des modèles de documents sous la forme de structures de données dans un automate, les modèles de documents étant formés par la réunion des composantes "texte", "graphique" et/ou "image", en vue de subdiviser le modèle de document en ses composantes et de poursuivre le traitement de ces dernières dans des modules d'évaluation pour des cas particuliers d'application, et selon lequel on extrait ligne-par-ligne, à partir des signaux numérisés de sortie d'un dispositif d'exploration optique, des descripteurs, qui représentent des zones d'appui le long de bords d'un modèle de document considéré, des descripteurs sont calculés dans un premier module et les données concernant les descripteurs sont mémorisées en un emplacement respectif libre d'une mémoire de données, à la suite de quoi une information concernant l'emplacement de mémoire utilisé est transmise retour par la mémoire de données, un second module est activé sous l'effet du transfert de l'information d'adresse devant être renvoyée et prend en charge cette information d'adresse avec des indices provenant de listes, le second module de cette information d'adresse est utilisé pour introduire le descripteur, mémorisé dans la mémoire de données, dans une chaîne déjà présente de descripteurs avec un représentant du bord ou pour commencer une nouvelle chaîne de descripteurs de manière à former un nouveau représentant du bord, nécessaire à cet effet, auquel cas en ce qui concerne les chaînes de descripteurs, il s'agit respectivement d'un chaînage de descripteurs individuels à l'aide de pointeurs, et un nouveau descripteur, qui est mémorisé en un emplacement quelconque de la mémoire de données, et est relié par des pointeurs à la chaîne déjà existante considérée ou à des chaînes déjà existantes, et la position du ou des représentants de bords, associés est prélevée directement des listes à l'aide des indices transférés des listes, et, lors d'une modification des représentants des chaînes de descripteurs, cette information est à nouveau réintroduite par le second module dans les listes, auquel cas, lorsqu'un bord complètement fermé a été formé par une chaîne de descripteurs, le second module transfère à un troisième module l'indice de ce bord en vue d'un traitement ultérieur, et le troisième module et les modules successifs classent plusieurs bords en formant des structures de données organisées d'une manière hiérarchique et ces structures sous la forme d'éléments constitutifs de textes, de graphiques et/ou d'images, et l'indice du représentant d'une structure de données terminée, possédant une telle organisation hiérarchique et contenant la totalité de l'information, mémorisée dans la mémoire de données et concernant ce représentant ainsi que l'information concernant ses représentants qui lui sont d'un rang inférieur, est délivrée par un module de sortie pour une procédure ultérieure d'évaluation dans des modules d'évaluation, et seul l'indice du représentant de rang supérieur est transmis à l'un des modules d'évaluation et ce module traite, au moyen d'un accès particulier à la mémoire de données, l'information mémorisée dans cette mémoire au niveau de l'indice du représentant concerné, et pour extraire les caractéristiques d'identification à partir d'une description d'images obtenue de cette dernière, et selon lequel il est prévu

– que les éléments de structures fines sont formés dans un module de formation des éléments de structures fines,

– que ces éléments de structures fines sont réunis, pendant le traitement ligne par ligne de l'image du document, pour former des chaînes de bords fins, qui reproduisent, d'une manière précise pour chaque élément d'image, les variations des bords des différents modèles,

– qu'on associe les différentes sections de ces bords fins aux descripteurs de manière qu'ils décrivent de façon précise la variation du bord entre deux descripteurs respectifs,

– que, lors de chaque nouvelle ligne d'exploration, les données concernant les éléments de structures fines sont mémorisées, sous la forme de chaînes partielles de structures fines qui décrivent les bords des modèles d'une manière précise pour chaque élément d'image, en des emplacements libres de la mémoire de données et sont chaînés entre eux conformément à la variation du bord du module,

– qu'on réalise un chaînage d'une chaîne partielle de structures fines, nouvellement formée dans une ligne d'images, sur la base d'une information simultanément délivrée de listes avec une chaîne de structures fines, déjà existante, devant être complétée, et que la position de l'élément de structures fines, qui forme la nouvelle extrémité ouverte du bord de la chaîne de structures fines, est transmise en retour, lors d'une signalisation en retour, au module de formation des éléments de structures fines, ce module étant informé, par cette signalisation en retour, de la position de l'extrémité libre du bord dans la mémoire de données soit dans des listes supplémentaires des listes prévues pour la ligne d'image présente (YA) et pour la ligne d'image précédente (YA–1) ou dans le représentant du bord, de rang supérieur à la chaîne de bords fins, ce qui permet d'appliquer la chaîne partielle de structures fines, qui apparaît dans la ligne d'image immédiatement suivante en tant que prolongement du bord, au bord ouvert,

– que les éléments de structures fines contiennent respectivement une information concernant l'orientation de l'élément d'image considéré, un pointeur désignant l'élément de structure fine immédiatement suivant et les coordonnées (i, j) du centre de l'élément dans un système superposé de coordonnées précises (figure 1),

– que, dans chaque ligne d'image explorée, il apparaît pour chaque bord découpé du modèle, l'une desdites chaînes partielles de structures fines, qui est chaînée avec l'extrémité ouverte de la chaîne associée de structures fines (figure 2, figure 3),

– que lors de l'entrée d'un nouveau descripteur dans la chaîne de descripteurs, ce nouveau descripteur trouve, dans le représentant du bord de rang supérieur, l'information concernant l'extrémité ouverte du bord de la chaîne de structure fine, qui lui est associée,

– que cette chaîne de structures fines est parcourue jusqu'à la position du descripteur,

– qu'un pointeur dirigé sur cet élément de structure fine est introduit dans le descripteur,

– que dans le représentant du bord dans la mémoire de données, un pointeur indique le début et la fin de la chaîne associée de structures fines,

– que dans le module du bord, lors de la convergence de deux bords, des opérations analogues à celles prévues pour les chaînes de descripteurs et concernant la production, la réunion, l'extension et la terminaison relatives à des chaînes de structures fines, sont mises en œuvre,

– que le module d'évaluation délivre la structure de données organisée de façon hiérarchique, de préférence pour chaque objet devant être identifié pour former l'image de caractéristiques d'identification,

– que des vecteurs connus en soi de projection $(c(\alpha, n), t(\alpha, n))$ sont calculés à partir des éléments de structures fines d'une telle structure de données,

– que les chaînes de structures fines de l'objet à identifier sont parcourues,

– que le vecteur de projection $(c(\alpha, n))$ est calculé par le fait que l'image de chaque élément individuel d'une chaîne de structures fines est formée sur un élément $n$ dans le vecteur de projection $(c(\alpha, n))$, $n$ étant déterminé à partir des coordonnées i, j d'un élément de structure fine et de l'angle de projection ($\alpha$), la valeur "$c(\alpha, n)$" étant augmenté de 1 pour l'élément correspondant,

– que le vecteur de projection $(t(\alpha, n))$ est calculé par le fait que les chaînes de structures fines de l'objet à identifier sont parcourues,

– que pour chaque élément de structure fine, la valeur $n$ et une valeur f sont calculées en fonction des coordonnées (i, j) ainsi que de l'angle de

projection ($\alpha$), la valeur $f$ étant calculée par multiplication à partir d'une valeur $q$ et d'une valeur $b$, et la valeur $q$ correspondant à la distance entre l'élément de structure fine et une droite ($t(\alpha, n)$) (figure 5), auquel cas la valeur associée étant ajoutée dans la cellule de mémoire $n$ de "$t(\alpha, n)$" pour chaque élément de structure fine de telle sorte que des valeurs $f$ fournissent une valeur positive sur le côté d'un élément de bord, tourné vers le même modèle, et une valeur négative sur le côté, tourné à l'opposé du modèle, une valeur $f$ étant calculée sous la forme du produit de la distance entre les coordonnées du centre de l'élément de structure fine et la droite de projection "$t(\alpha, n)$", à savoir la valeur $q$, par la largeur de projection $b$ d'un élément de structure fine à partir de la droite de projection "$t(\alpha, n)$", et

— que les caractéristiques d'identification devant être extraites sont calculées de façon connue en soi à partir des vecteurs de projection ($c(\alpha, n)$, $t(\alpha, n)$).

2. Procédé suivant la revendication 1, caractérisé par le fait que la contribution d'un élément de structure fine à "$c(\alpha, n)$" est distribuée par ses composantes entre des éléments de mémoire voisins de $n$ et également la contribution de l'élément de structure fine considéré à "$t(\alpha, n)$" et est distribuée entre ces éléments de mémoire voisins, en fonction de la largeur de projection (b) et du point de projection (n).

3. Procédé suivant la revendication 1 ou 2, caractérisé par le fait que les valeurs $n$, $q$, $b$ et $f$ sont déterminées au moyen de l'accès à des tables.

4. Procédé suivant la revendication 1 ou 2, caractérisé par le fait que les valeurs $n$, $q$, $b$ et $f$ sont calculées d'une part par un accès à des paramètres partiels dans des tables et d'autre part au moyen d'opérations arithmétiques dans une unité de calcul devant être prévue.

5. Procédé suivant la revendication 1 ou 2, caractérisé par le fait que les valeurs $n$, $q$, $b$ et $f$ sont déterminées exclusivement par des opérations de calcul.

6. Procédé suivant la revendication 1, caractérisé par le fait que la proximité directe entre des éléments de structures fines dans une ligne d'image est représentée par des pointeurs transversaux orientés vers la gauche et/ou vers la droite.

7. Procédé suivant la revendication 1, caractérisé par le fait que les coordonnées des centres des différents éléments de structures fines ne sont pas introduites directement dans ces éléments, mais sont déterminés à l'aide de contours pendant le parcours de la chaîne de structures fines.

8. Procédé suivant la revendication 1, caractérisé par le fait que le système de coordonnées précises, qui est superposé à la matrice d'image, à savoir l'information numérisée des valeurs de gris de l'image, possède de préférence une résolution double de celle de la matrice d'image et est superposée à cette dernière de telle sorte qu'aussi bien les centres des éléments de structures fines que le centre d'un élément d'image peuvent être adressés (figure 1).

9. Procédé suivant la revendication 1, caractérisé par le fait que la formation de la caractéristique est exécutée aussi bien pour des bords individuels que pour des structures de données d'un niveau hiérarchique supérieur.

10. Procédé suivant la revendication 1, caractérisé par le fait que les éléments de structures fines possèdent de préférence, conformément aux bords des éléments d'image, quatre possibilités différentes d'orientation (figure 2).

11. Procédé suivant la revendication 1, caractérisé par le fait que les éléments de structure fine possèdent, pour l'amélioration de la capacité d'identification, de préférence huit possibilités d'orientation.

12. Dispositif pour la mise en œuvre du procédé selon la revendication 1, caractérisé par le fait que le module de l'élément de structure fine est branché en aval du premier module d'extraction des descripteurs et a également accès au système de listes constitué par les listes pour la ligne d'image présente (YA) à la ligne d'image précédente (YA–1).

13. Dispositif pour la mise en œuvre du procédé suivant la revendication 10, caractérisé par le fait que la fonction du module des éléments de structures fines est assurée conjointement par le premier module servant à réaliser l'extraction des descripteurs.

14. Dispositif pour la mise en œuvre du procédé suivant l'une des revendications 1–11, caractérisé par le fait que pour la mise en œuvre de toutes les opérations d'exploration, d'association, d'échanges d'informations et de calcul, il est prévu un calculateur, que la mémoire de données est une mémoire à semiconducteurs et qu'une zone prédéterminée de la mémoire de données mémorise les différents algorithmes pour le procédé.

# FIG 1

x,i

y,j

Pixel

# FIG 2

G1

G2

G3

G4

EP 0 220 467 B1

# FIG 3

Muster

Außenrand

Innenrand

# FIG 4

T2  T3  T1  B0  T0  Muster  B1  B2  B3

Deskriptoren

# FIG 5

PROJEKTION DER RANDELEMENTE FÜR $c(\alpha, n)$

# FIG 6